(19) Europäisches Patentamt / European Patent Office / Office européen des brevets

(11) **EP 2 446 571 B1**

(12) **EUROPEAN PATENT SPECIFICATION**

(45) Date of publication and mention
of the grant of the patent:
**25.03.2015 Bulletin 2015/13**

(21) Application number: **09779976.1**

(22) Date of filing: **26.06.2009**

(51) Int Cl.:
*H04L 1/16* (2006.01)

(86) International application number:
**PCT/EP2009/058058**

(87) International publication number:
**WO 2010/149221 (29.12.2010 Gazette 2010/52)**

(54) **APPARATUS, METHOD AND ARTICLE OF MANUFACTURE FOR DETERMINING AN UPLINK HARQ RESOURCE**

SYSTEM, VERFAHREN UND HERSTELLUNGSARTIKEL ZUR BESTIMMUNG EINER UPLINK-HARQ-RESSOURCE

APPAREIL, PROCÉDÉ ET ARTICLE DE FABRICATION PERMETTANT DE DÉTERMINER DES RESSOURCES HARQ EN LIAISON MONTANTE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**02.05.2012 Bulletin 2012/18**

(73) Proprietor: **Nokia Solutions and Networks Oy
02610 Espoo (FI)**

(72) Inventors:
• **SIPOLA, Heikki, Einari
FIN-90540 Oulu (FI)**
• **SAARINEN, Marko, Pentti, Mikael
FIN-90420 Oulu (FI)**

(74) Representative: **Borgström, Markus et al
Nokia Solutions and Networks GmbH & Co. KG
CEF T&I IPR / Patent Administration
80240 Munich (DE)**

(56) References cited:
**US-A1- 2009 109 906**

• **MOTOROLA: "PHICH Assignment for TDD and FDD E-UTRA" 3GPP DRAFT; R1-080734 - PHICH ASSIGNMENT_FDD-TDD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20080215, 15 February 2008 (2008-02-15), XP050109224 [retrieved on 2008-02-15]**
• **ERICSSON: "PHICH and UL HARQ timing and association for TDD" 3GPP DRAFT; R1-081524, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shenzhen, China; 20080327, 27 March 2008 (2008-03-27), XP050109939 [retrieved on 2008-03-27]**
• **NOKIA ET AL: "PHICH resource mapping/ dimensioning for TDD" 3GPP DRAFT; R1-081453, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shenzhen, China; 20080326, 26 March 2008 (2008-03-26), XP050109870 [retrieved on 2008-03-26]**

**Description**

FIELD OF THE INVENTION

The present invention relates to control channel design of a mobile communication network. More particularly, the invention relates to a method, an apparatus, and an article of manufacture comprising a computer readable medium.

BACKGROUND

The procedures of determining uplink hybrid automatic repeat request (HARQ) acknowledgement/non-acknowledgement (ACK/NACK) resources for receivers in a mobile communication network often lead to overlapping of resources. This, in turn, leads to over consuming of downlink control channel capacity. Thus, there is a need to improve uplink HARQ ACK/NACK resource control in order to improve performance of a mobile communication network.
US-A-2009/0 109 906 discloses HARQ resource assignment for multi-user MIMO communications.

SUMMARY

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented below.
Various aspects of the invention comprise a method, an apparatus, and an article of manufacture comprising a computer readable medium as de-fined in the independent claims. Further embodiments of the invention are disclosed in the dependent claims.
According to an aspect of the invention, there are provided apparatuses as specified in claim 1.
According to an aspect of the invention, there is provided a method as specified in claim 8.
According to an aspect of the invention, there is provided an article of manufacture comprising a computer readable medium as specified in claim 15.
According to an aspect of the invention, there is provided an apparatus comprising a calculator configured to calculate one or more values for determination of an uplink hybrid automatic repeat request acknowledgement/non-acknowledgement resource for each scheduled user terminal such that the uplink hybrid automatic repeat request acknowledgement/non-acknowledgement resource becomes the same for all user terminals which are not scheduled non-adaptively.
According to an aspect of the invention, there is provided a method comprising calculating one or more values for determination of an uplink hybrid automatic repeat request acknowledgement/non-acknowledgement resource for each scheduled user terminal such that the uplink hybrid automatic repeat request acknowledgement/non-acknowledgement resource becomes the same for all user terminals which are not scheduled non-adaptively.
According to an aspect of the invention, there is provided an article of manufacture comprising a computer readable medium and embodying program instructions thereon, executable by a computer operably coupled to a memory and, when executed by the computer, carry out the function of calculating one or more values for determination of an uplink hybrid automatic repeat request acknowledgement/non-acknowledgement resource for each scheduled user terminal such that the uplink hybrid automatic repeat request acknowledgement/non-acknowledgement resource becomes the same for all user terminals which are not scheduled non-adaptively.
Although the various aspects, embodiments and features of the invention are recited independently, it should be appreciated that all combinations of the various aspects, embodiments and features of the invention are possible and within the scope of the present invention as claimed.

BRIEF DESCRIPTION OF THE DRAWINGS

In the following the invention will be described in greater detail by means of exemplary embodiments with reference to the attached drawings, in which

Figure 1 is shows a simplified block diagram illustrating an exemplary system architecture;
Figure 2 shows a simplified block diagram illustrating examples of apparatuses that are suitable for use in practising the exemplary embodiments of the invention;
Figure 3 shows an exemplary signalling procedure according to an embodiment of the invention; and
Figure 4 shows an example of a method according to an embodiment of the invention.

DETAILED DESCRIPTION OF SOME EMBODIMENTS

Exemplary embodiments of the present invention will now be de-scribed in more detail with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure will satisfy applicable legal requirements. Al-though the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Like reference numerals refer to like elements throughout.

The present invention is applicable to any user terminal, server, corresponding component, and/or to any communication system or any combination of different communication systems. The communication system may be a fixed communication system or a mobile communication system or a communication system utilizing both fixed networks and mobile networks. The used protocols, the specifications of communication systems, servers and user terminals, especially in wireless communication, develop rapidly. Such a development may require extra changes to an embodiment. Therefore, all words and expressions should be interpreted broadly and they are intended to illustrate, not to restrict, the embodiment.

In the following, different embodiments will be described using, as an example of a system architecture whereto the embodiments may be applied, an architecture based on LTE/SAE (Long Term Evolution/System Architecture Evolution) network elements without however restricting the embodiment to such an architecture.

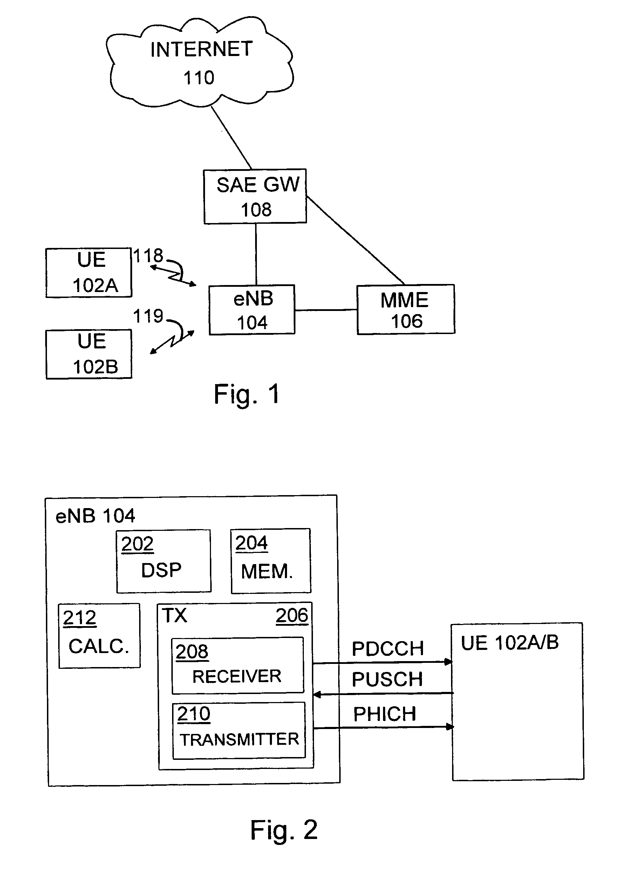

With reference to Figure 1, let us examine an example of a radio system to which embodiments of the invention can be applied. In this example, the radio system is based on LTE/SAE (Long Term Evolution/System Architecture Evolution) network elements. However, the invention described in these examples is not limited to the LTE/SAE radio systems but can also be implemented in other radio systems, such as WIMAX (Worldwide Interoperability for Microwave Access), or in other suitable radio systems.

A general architecture of a radio system is illustrated in Figure 1. Figure 1 is a simplified system architecture only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and proto-cols used in or for group communication are irrelevant to the actual invention. Therefore, they need not be discussed in more detail here.

The exemplary radio system of Figure 1 comprises a service core of an operator including the following elements: an MME (Mobility Management Entity) 106 and an SAE GW (SAE Gateway) 108.

Base stations that may also be called eNBs (Enhanced node Bs) 104 of the radio system host the functions for Radio Resource Management: Radio Bearer Control, Radio Admission Control, Connection Mobility Control, Dynamic Resource Allocation (scheduling). The MME 106 is responsible for control plane traffic signalling like mobility commands to the eNBs 104 and user equipment (UE) 102A, 102B.

User equipment (UE) 102A, 102B which may also be called mobile/user terminals may communicate with the eNBs 104 using signals 118, 119. Signals 118, 119 between the UEs 102A, 102B and the eNB 104 carry digitized information, which is e.g. traffic data or control data.

The calls/services may be "long distance" where user traffic passes via the SAE GW 108. For example, a connection from the UE 102A, 102B to an external IP network, such as to the Internet 110, may be guided via the SAE GW 108. However, local calls/services are also possible in the exemplary radio system.

Each eNB 104 of the radio system broadcasts a signal that may be a pilot signal such that the UE 102A, 102B can observe a potential base station to serve the UE 102A, 102B. Based on the pilot signals, the mobile terminal selects a base station with which to start a communication when switched on or on which to perform a handoff during normal operation.

When the eNB 104s are determining uplink hybrid automatic repeat request (HARQ) acknowledgement/non-acknowledgement (ACK/NACK) resources, overlapping of resources often takes place. For example, in an LTE physical hybrid ARQ indicator channel (PHICH) assignment procedure that is used for determining ACK/NACK resources related to physical uplink shared channel (uplink PUSCH) transmission, certain scenarios of overlapping PHICH resources may occur. According to 3GPP 36.213 version 8.5.0, a PHICH group and an orthogonal sequence within the groups are defined in the following way. For scheduled PUSCH transmissions in a subframe n, UE shall determine the corresponding PHICH resource in a subframe $n + K_{PHICH}$, where $K_{PHICH}$ is always 4 for frequency division duplex (FDD) and is given in table 1 for time division duplex (TDD). For a subframe bundling operation, the corresponding PHICH resource is associated with the last subframe transmission in a bundle.

Table 1. $k_{PHICH}$ for TDD

| TDD UL/DL Configuration | UL subframe index $n$ | | | | | | | | | |
|---|---|---|---|---|---|---|---|---|---|---|
| | 0 | 1 | 2 | 3 | 4 | 5 | 6 | 7 | 8 | 9 |
| 0 | | | 4 | 7 | 6 | | | 4 | 7 | 6 |
| 1 | | | 4 | 6 | | | | 4 | 6 | |
| 2 | | | 6 | | | | | 6 | | |
| 3 | | | 6 | 6 | 6 | | | | | |
| 4 | | | 6 | 6 | | | | | | |
| 5 | | | 6 | | | | | | | |
| 6 | | | 4 | 6 | 6 | | | 4 | 7 | |

The PHICH resource is determined from the lowest index physical resource block (PRB) of the uplink resource allocation and a 3-bit uplink demodulation reference symbol (DMRS) cyclic shift associated with the PUSCH transmission, both indicated in the physical downlink control channel (PDCCH) with control information (DCI) format 0 granting the PUSCH transmission.

The PHICH resource is identified by an index pair $\left( n_{PHICH}^{group}, n_{PHICH}^{seq} \right)$ where $n_{PHICH}^{group}$ is a PHICH group number and $n_{PHICH}^{seq}$ is an orthogonal sequence index within the group as defined by:

$$n_{PHICH}^{group} = (I_{PRB\_RA}^{lowest\_index} + n_{DMRS}) \bmod N_{PHICH}^{group} + I_{PHICH} N_{PHICH}^{group}$$

$$n_{PHICH}^{seq} = \left( \lfloor I_{PRB\_RA}^{lowest\_index} / N_{PHICH}^{group} \rfloor + n_{DMRS} \right) \bmod 2N_{SF}^{PHICH}$$

where $n_{DMRS}$ is mapped from the cyclic shift for a DMRS field (according to Table 2) in a DCI format 0 [4] for the transport block associated with the corresponding PUSCH transmission. For a semi-persistently configured PUSCH transmission on subframe n in the absence of a corresponding PDCCH with a DCI Format 0 in subframe $n$-$k_{PUSCH}$ or a PUSCH transmission associated with a random access response grant, $n_{DMRS}$ is set to zero where $k_{PUSCH}$ is as defined in section 8 of the 3GPP 36.213 version 8.5.0; $N_{SF}^{PHICH}$ is the spreading factor size used for PHICH modulation; $I_{PRB\_RA}^{lowest\_index}$ is the lowest PRB index of the corresponding PUSCH transmission; $N_{PHICH}^{group}$ is the number of PHICH groups configured by higher layers; and $I_{PHICH}$ is a TDD PHICH group shift defined as:

$$I_{PHICH} = \begin{cases} 1 & \text{for TDD UL/DL configuration 0 with PUSCH transmission in subframe } n = 4 \text{ or } 9 \\ 0 & \text{otherwise} \end{cases}$$

Table 2. Mapping between $n_{DMRS}$ and the cyclic shift for DMRS field in DCI format 0 in [4]

| Cyclic shift for DMRS field | $n_{DMRS}$ |
|---|---|
| 000 | 0 |
| 001 | 1 |
| 010 | 2 |
| 011 | 3 |
| 100 | 4 |
| 101 | 5 |

(continued)

| Cyclic shift for DMRS field | $n_{DMRS}$ |
|---|---|
| 110 | 6 |
| 111 | 7 |

An example of the behavior of UE for selecting a new transmission or retransmission based on signaled PHICH feedback and PDCCH is defined in 3GPP 36.300 version 8.6 according to Table 3.

Table 3. Uplink HARQ operation

| HARQ feedback seen by UE | PDCCH seen by UE | UE behavior |
|---|---|---|
| ACK or NACK | New transmission | New transmission according to PDCCH |
| ACK or NACK | Retransmission | Retransmission according to PDCCH (adaptive retransmission) |
| ACK | None | No (re)transmission, keep data in HARQ buffer and PDDCH is required to resume retransmissions |
| NACK | None | Non-adaptive retransmission |

The PHICH index may be defined using the uplink demodulation reference symbol cyclic shift, the spreading factor size used for PHICH modulation, the lowest PRB of the corresponding PUSCH transmission, the number of PHICH groups configured by higher layers and the TDD PHICH group shift. Certain combinations of these affecting parameters can lead to overlapping of the PHICH index between different UEs and sending individual HARQ ACK/NACK is not possible in those situations.

In order to prevent overlapping, a scheduler may control the lowest PRB of the corresponding PUSCH transmission or the uplink demodulation reference symbol cyclic shift.

In an embodiment, one or more values are calculated for determination of the uplink HARQ ACK/NACK resource for each scheduled UE such that the uplink HARQ ACK/NACK resource becomes the same for all UEs. The uplink HARQ ACK/NACK resource may be in one example the PHICH resource, and the one or more values that are calculated may thus comprise one or more of the following: the spreading factor size used for PHICH modulation, the number of PHICH groups configured, the lowest PRB of the corresponding PHICH transmission, the uplink demodulation reference symbol cyclic shift, and the TDD PHICH group shift.

In an embodiment, the uplink demodulation reference symbol cyclic shift for each UE 102A, 102B to whom non-adaptive retransmission is not planned to be used is controlled such that the PHICH resource, e.g. the PHICH index, becomes the same for all the UEs 102A, 102B of the same PHICH group. For example, the eNB 104 selects the uplink demodulation reference symbol cyclic shift such that the PHICH index is the same inside the used PHICH group for each scheduled UE 102A, 102B. In an embodiment, this combined PHICH field is always filled with an ACK.

Before the eNB 104 sends PDCCHs with uplink grants, it may calculate the uplink demodulation reference symbol cyclic shift such that all the UEs 102A, 102B utilize the same PHICH index inside the same PHICH group. Depending on scheduling, the minimum number of utilized PHICH indexes is 1 and the maximum number is the number of configured PHICH groups.

This functionality has several advantages. PDCCH capacity can be saved since fewer PHICH groups are required, consuming fewer control channel elements (CCE) from the PDCCH. For example, by assuming a 10 MHz cell and normal cyclic prefix in downlink, there may be a minimum of 16 different PHICH indexes (2 PHICH groups, 8 cyclic shifts within the group). This is adequate for any number of simultaneously scheduled users with adaptive retransmission utilizing an embodiment of the invention. If a unique PHICH index is needed, depending on the number of scheduled users, up to 13 PHICH groups are required. Therefore the maximum CCE saving is 4.

Further, the link level performance of the PHICH is improved since only one cyclic shift per PHICH group is used, excluding non-adaptive retransmissions. This decreases the probability for an ACK to be interpreted as a NACK, which would cause undesired non-adaptive retransmission.

If there are many PHICH groups configured, it is more likely that less groups are actually needed in an embodiment of the invention and the power of the used group(s) can be boosted to improve link level performance of the used PHICH group(s). Further, any merged HARQ feedback rules are not needed to prevent the PHICH capacity from running out, and downlink Layer 1 PHICH encoder load decreases, as fewer PHICHs are sent.

Before further discussing exemplary embodiments of the invention, reference is made to Figure 2 that shows a simplified block diagram illustrating examples of apparatuses that are suitable for use in practising the exemplary embodiments of the invention.

The apparatus 104 may be any network node or a host which is able to provide the necessary functionality of at least some of the embodiments. The apparatus 104 may be a network entity of a radio system, such as an entity that is a part of a base station. It is also possible that the different modules of the apparatus reside in different network entities of the system.

The apparatus 104 may generally include a processor 202, controller, control unit or the like connected to a memory 204 and to various interfaces 206 of the apparatus. Generally the processor 202 is a central processing unit, but the processor may be an additional operation processor. The processor may comprise a computer processor, application-specific integrated circuit (ASIC), field-programmable gate array (FPGA), and/or other hardware components that have been programmed to carry out one or more functions of an embodiment.

In Figure 2, a wireless network is adapted for communication with user terminals via at least one eNB. Although the apparatuses 102A/B, 104 have been depicted as single entities, different modules and memory may be implemented in one or more physical or logical entities. The apparatus 104 is configured to calculate one or more values for the determination of an uplink hybrid automatic repeat request (HARQ) acknowledgement/non-acknowledgement (ACK/NACK) resource for each UE 102A/B scheduled for transmission such that the uplink HARQ ACK/NACK resource becomes the same for all the UEs.

For this purpose, the apparatus 104 that may be at least a part of one or more eNBs of a public mobile network comprises a processor 202 and a communication unit 206 for sending and receiving different outputs, information and messages. The communication unit 206 may comprise a receiver 208 for receiving signals and a transmitter 210 for transmitting signals. In this example, the apparatus 104 is hence called the eNB 104.

The eNB 104 may include a memory 204 for storing control information at least temporarily. The eNB 104 further comprises a calculator 212 configured to calculate the one or more values for the determination of an uplink HARQ ACK/NACK resource for each UE 102A/B scheduled for transmission such that the uplink HARQ ACK/NACK resource becomes the same for all user terminals. The calculator 212 may also be a part of the processor 202 and/or the memory 204. For example, the memory 204 may store computer program code such as software applications (for example for the detection device) or operating systems, information, data, content, or the like for the processor 202 to perform steps associated with the operation of the apparatus in accordance with embodiments.

In the illustrated embodiment, the memory 204 stores instructions on how to perform calculation of the one or more values for the determination of an uplink HARQ ACK/NACK resource for each scheduled user terminal such that the uplink HARQ ACK/NACK resource becomes the same for all the user terminals which are not scheduled non-adaptively. The memory may be, for example, random access memory (RAM), a hard drive, or other fixed data memory or storage device. Further, the memory, or part of it, may be removable memory detachably connected to the apparatus. The communication unit 206 is configured to communicate with the apparatus 102 that may be user equipment, such as a user terminal, which is a piece of equipment or a device that associates, or is arranged to associate, the user terminal and its user with a subscription and allows the user to interact with a communications system. The user terminal presents information to the user and allows the user to input information. In other words, the user terminal may be any terminal capable of receiving information from and/or transmitting information to the network, connectable to the network wirelessly or via a fixed connection. Examples of the user terminal include a personal computer, a game console, a laptop (a notebook), a personal digital assistant, a mobile station (mobile phone), and a line telephone.

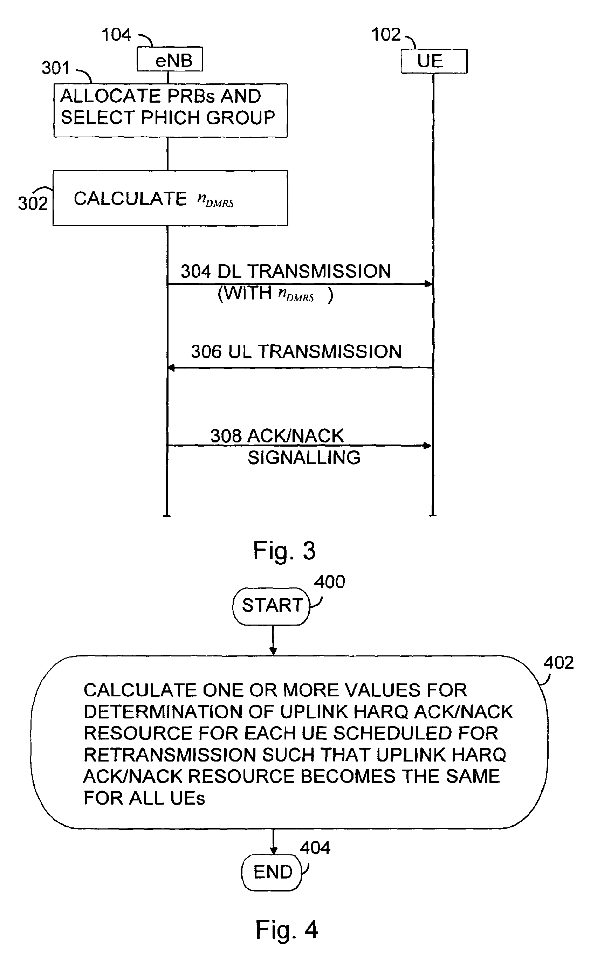

The functionality of the processor 202 is described in more detail below with Figures 3 to 4. It should be appreciated that the apparatus may also comprise other different units. However, they are irrelevant to the actual invention and, therefore, they need not be discussed in more detail here.

The techniques described herein may be implemented by various means so that an apparatus implementing one or more functions described with an embodiment comprises not only prior art means but also means for implementing the one or more functions of a corresponding apparatus described with an embodiment, and it may comprise separate means for each separate function, or means may be configured to perform two or more functions. For example, these techniques may be implemented in hardware (one or more apparatuses), firmware (one or more apparatuses), software (one or more modules), or combinations thereof. For firmware or software, the implementation can be through modules (e.g. procedures, functions, and so on) that per-form the functions described herein. The software codes may be stored in any suitable, processor/computer-readable data storage medium(s) or memory unit(s) or article(s) of manufacture and executed by one or more processors/computers. The data storage medium or the memory unit may be implemented within the processor/computer, or external to the processor/computer, in which case it can be communicatively coupled to the processor/computer via various means, as is known in the art.

The programming, such as executable code or instructions (e.g. software or firmware), electronic data, databases, or other digital information, can be stored in memories and it may include processor-usable media. Processor-usable media may be embodied in any computer program product or article of manufacture which can contain, store, or maintain programming, data or digital information for use by or in connection with an instruction execution system including the processor 202 in the exemplary embodiment. For example, exemplary processor-usable media may include any one of physical media, such as electronic, magnetic, optical, electromagnetic, and infrared or semiconductor media. Some more specific examples of processor-usable media include, but are not limited to, a portable magnetic computer diskette, such as a floppy diskette, zip disk, hard drive, random-access memory, read only memory, flash memory, cache memory, or other configurations capable of storing programming, data, or other digital information. In an embodiment, there is provided an article of manufacture comprising a computer readable medium and embodying program instructions thereon, executable by a computer operably coupled to a memory and, when executed by the computer, carry out the function of calculating one or more values for the determination of an uplink HARQ ACK/NACK resource for each scheduled UE such that the uplink HARQ ACK/NACK resource becomes the same for all the UEs which are not scheduled non-adaptively.

At least some embodiments or aspects described herein may be implemented using programming stored within an appropriate memory de-scribed above, or communicated via a network or other transmission media and configured to control an appropriate processor. For example, programming may be provided via appropriate media including, for example, embodied within articles of manufacture, embodied within a data signal (e.g. modulated carrier wave, data packets, digital representations, etc.) communicated via an appropriate transmission medium, such as a communication network (e.g. the Internet or a private network), wired electrical connection, optical connection or electromagnetic energy, for example, via communications interface, or it may be provided using another appropriate communication structure or medium. Exemplary programming including processor-usable code may be communicated as a data signal embodied in a carrier wave in but one example.

In an embodiment, the uplink HARQ ACK/NACK resource is a PHICH resource, and the calculator 212 is configured to calculate the one or more values for the determination of the PHICH resource such that the PHICH resource becomes the same for all the user terminals of the same PHICH group.

In an embodiment, the calculated one or more values for the determination of the uplink HARQ ACK/NACK resource comprises an uplink demodulation reference symbol cyclic shift.

In an embodiment, the calculated one or more values for the determination of the uplink HARQ ACK/NACK resource comprises one or more of the following values: the lowest PRB of the corresponding PUSCH transmission, and the uplink demodulation reference symbol cyclic shift. Thus, it is possible that for example both the values of the uplink demodulation reference symbol cyclic shift and the lowest PRB of the corresponding PUSCH transmission are controlled in order to determine the uplink HARQ ACK/NACK resource such that the uplink HARQ ACK/NACK resource becomes the same for all the user terminals. It is also possible that only one of those values is controlled.

In an embodiment, the uplink demodulation reference symbol cyclic shift is calculated by using one or more of the following: the spreading factor size used for physical hybrid automatic repeat request indicator channel modulation, the number of physical hybrid automatic repeat request indicator channel groups configured, the lowest physical resource block of the corresponding physical hybrid automatic repeat request indicator channel transmission, and $I_{PHICH}$.

In an embodiment, the transmitter 210 is configured to transmit the calculated one or more values for the determination of the uplink HARQ ACK/NACK resource to each user terminal.

In an embodiment, the transmitter 210 is further configured to always transmit a positive acknowledgement with an acknowledgement signalling transmitted to the scheduled user terminals.

Figure 3 illustrates examples of processes in the eNB 104 and a signalling procedure between the eNB 104 and the UE 102 according to an embodiment of the invention. In 301, the eNB 104 allocates physical resource blocks for the UE 102 and selects an uplink HARQ group, i.e. a PHICH group in this example.

In 302, the eNB 104 determines one or more values for the determination of an uplink HARQ ACK/NACK resource for the UE 102 such that the uplink HARQ ACK/NACK resource becomes the same for all UEs. In this example, the uplink HARQ ACK/NACK resource determined is a PHICH resource and the one or more values determined comprises a value for an uplink demodulation reference symbol cyclic shift.

In 304, a downlink transmission from the eNB 104 to the UE 102 takes place. The determined value for the determination of the PHICH resource is included in the downlink transmission signalling. In this example, the uplink demodulation reference symbol cyclic shift and the lowest PRB of the corresponding PUSCH transmission is included in the downlink transmission, here PDCCH transmission.

In 306, an uplink transmission signalling is received in the eNB 104 from the UE 102. In this example the uplink transmission signalling is an uplink PUSCH signalling.

In 308, ACK/NACK signalling from the eNB 104 to the UE 102 takes place. In this example, the ACK/NACK signalling is PHICH signalling. In an embodiment, the eNB 104 always sends an ACK with the ACK/NACK signalling to the UE 102. The PHICH may always be filled with ACK because the UE decision in this case is always dependent on the PDCCH. Figure 4 illustrates an example of a method according to an embodiment. The method starts in 400. In 402, an apparatus, e.g. in an eNB, per-forms calculating one or more values for the determination of an uplink hybrid automatic repeat request acknowledgement/non-acknowledgement resource for each scheduled user terminal such that the uplink hybrid automatic repeat request acknowledgement/non-acknowledgement resource becomes the same for all the user terminals. The method ends in 404.

The different embodiments of the invention provide several advantages. In an embodiment, more resources are available for uplink transmission signalling, e.g. for PDCCH. In an embodiment, ACK/NACK misdetection is decreased since only one cyclic shift per PHICH group is used. In an embodiment, fewer PHICH groups are actually used and power on PHICH may be boosted.

It will be obvious to a person skilled in the art that, as the technology advances, the inventive concept can be implemented in various ways. The invention and its embodiments are not limited to the examples described above but may vary within the scope of the claims.

**Claims**

1. An apparatus (104) comprising a calculator (212) configured to calculate one or more values for determination of an uplink hybrid automatic repeat request acknowledgement/non-acknowledgement resource for each scheduled user terminal (102A, 102B) such that the uplink hybrid automatic repeat request acknowledgement/non-acknowledgement resource becomes the same for all user terminals which are not scheduled non-adaptively.

2. The apparatus of claim 1, wherein the uplink hybrid automatic repeat request acknowledgement/non-acknowledgement resource is a physical hybrid automatic repeat request indicator channel resource.

3. The apparatus of claim 2, wherein the calculator is further configured to calculate the one or more values for the determination of the physical hybrid automatic repeat request indicator channel resource such that the physical hybrid automatic repeat request indicator channel resource becomes the same for all the user terminals of the same physical hybrid automatic repeat request indicator channel group.

4. The apparatus of claim 1, wherein the calculated one or more values for the determination of the uplink hybrid automatic repeat request acknowledgement/non-acknowledgement resource comprise an uplink demodulation reference symbol cyclic shift.

5. The apparatus of claim 1, the apparatus further comprising a transmitter configured to transmit the calculated one or more values for the determination of the uplink hybrid automatic repeat request acknowledgement/non-acknowledgement resource to each user terminal.

6. The apparatus of claim 1, wherein the transmitter is further configured to always transmit a positive acknowledgement with an acknowledgement signalling transmitted to the user terminals which are not scheduled non-adaptively.

7. A method comprising calculating one or more values for determination of an uplink hybrid automatic repeat request acknowledgement/non-acknowledgement resource for each scheduled user terminal such that the uplink hybrid automatic repeat request acknowledgement/non-acknowledgement resource becomes the same for all user terminals which are not scheduled non-adaptively.

8. The method of claim 7, wherein the uplink hybrid automatic repeat request acknowledgement/non-acknowledgement resource is a physical hybrid automatic repeat request indicator channel resource.

9. The method of claim 8, the method further comprising calculating the one or more values for the determination of the physical hybrid automatic repeat request indicator channel resource such that the physical hybrid automatic repeat request indicator channel resource becomes the same for all the user terminals of the same physical hybrid automatic repeat request indicator channel group.

10. The method of claim 7, wherein the calculated one or more values for the determination of the uplink hybrid automatic repeat request acknowledgement/non-acknowledgement resource comprise an uplink demodulation reference symbol cyclic shift.

11. The method of claim 7, the method further comprising transmitting the calculated one or more values for the determination of the uplink hybrid automatic repeat request acknowledgement/non-acknowledgement resource to each user terminal.

12. The method of claim 7, the method further comprising transmitting always a positive acknowledgement with an acknowledgement signalling transmitted to the user terminals which are not scheduled non-adaptively.

13. An article of manufacture (104) comprising a computer readable medium (204) and embodying program instructions thereon, executable by a computer (202, 212) operably coupled to a memory and, when executed by the computer, carry out the function of calculating one or more values for determination of an uplink hybrid automatic repeat request acknowledgement/non-acknowledgement resource for each scheduled such that the uplink hybrid automatic repeat request acknowledgement/non-acknowledgement resource becomes the same for all user terminals which are not scheduled non-adaptively.

14. The article of manufacture of claim 13, wherein the uplink hybrid automatic repeat request acknowledgement/non-acknowledgement resource is a physical hybrid automatic repeat request indicator channel resource, and the article of manufacture further carrying out the function of calculating the one or more values for the determination of the physical hybrid automatic repeat request indicator channel resource such that the physical hybrid automatic repeat request indicator channel resource becomes the same for all the user terminals of the same physical hybrid automatic repeat request indicator channel group.

15. The article of manufacture of claim 13, wherein the calculated one or more values for the determination of the uplink hybrid automatic repeat request acknowledgement/non-acknowledgement resource comprises an uplink demodulation reference symbol cyclic shift.

16. The article of manufacture of claim 13, further carrying out the function of transmitting the calculated one or more values for the determination of the uplink hybrid automatic repeat request acknowledgement/non-acknowledgement resource to each user terminal.

17. The article of manufacture of claim 13, further carrying out the function of always transmitting a positive acknowledgement with an acknowledgement signalling transmitted to the user terminals which are not scheduled non-adaptively.

18. The article of manufacture of claim 13, the computer readable medium including at least one of the following media: a computer readable medium, a program storage medium, a record medium, a computer readable memory, a computer readable software distribution package, a computer readable signal, a computer readable telecommunication signal, and a computer readable compressed software package.

**Patentansprüche**

1. Vorrichtung (104), welche einen Rechner (212) aufweist, der dafür konfiguriert ist, einen oder mehrere Werte zur Bestimmung einer Ressource zur Bestätigung/Nichtbestätigung hybrider automatischer Wiederholungsanforderungen der Aufwärtsstrecke für jedes geplante Benutzerendgerät (102A, 102B) derart zu berechnen, dass die Ressource zur Bestätigung/Nichtbestätigung hybrider automatischer Wiederholungsanforderungen der Aufwärtsstrecke dieselbe für alle Benutzerendgeräte wird, welche nicht nichtadaptiv geplant werden.

2. Vorrichtung nach Anspruch 1, wobei die Ressource zur Bestätigung/Nichtbestätigung hybrider automatischer Wiederholungsanforderungen der Aufwärtsstrecke eine physikalische Indikatorkanalressource hybrider automatischer Wiederholungsanforderungen ist.

3. Vorrichtung nach Anspruch 2, wobei der Rechner ferner dafür konfiguriert ist, den einen oder die mehreren Werte zur Bestimmung der physikalischen Indikatorkanalressource hybrider automatischer Wiederholungsanforderungen derart zu berechnen, dass die physikalische Indikatorkanalressource hybrider automatischer Wiederholungsanforderungen dieselbe für alle Benutzerendgeräte derselben physikalischen Indikatorkanalgruppe hybrider automatischer Wiederholungsanforderungen wird.

4. Vorrichtung nach Anspruch 1, wobei der berechnete eine oder die berechneten mehreren Werte zur Bestimmung der Ressource zur Bestätigung/Nichtbestätigung hybrider automatischer Wiederholungsanforderungen der Aufwärtsstrecke eine zyklische Verschiebung von Demodulationsreferenzsymbolen der Aufwärtsstrecke beinhalten.

5. Vorrichtung nach Anspruch 1, wobei die Vorrichtung ferner einen Sender aufweist, der dafür konfiguriert ist, den berechneten einen oder die berechneten mehreren Werte zur Bestimmung der Ressource zur Bestätigung/Nichtbestätigung hybrider automatischer Wiederholungsanforderungen der Aufwärtsstrecke an jedes Benutzerendgerät zu senden.

6. Vorrichtung nach Anspruch 1, wobei der Sender ferner dafür konfiguriert ist, immer eine positive Bestätigung mit einer Bestätigungssignalisierung zu senden, die an die Benutzerendgeräte gesendet wird, welche nicht nichtadaptiv geplant werden.

7. Verfahren, welches das Berechnen eines oder mehrerer Werte zur Bestimmung einer Ressource zur Bestätigung/Nichtbestätigung hybrider automatischer Wiederholungsanforderungen der Aufwärtsstrecke für jedes geplante Benutzerendgerät beinhaltet, derart, dass die Ressource zur Bestätigung/Nichtbestätigung hybrider automatischer Wiederholungsanforderungen der Aufwärtsstrecke dieselbe für alle Benutzerendgeräte wird, welche nicht nichtadaptiv geplant werden.

8. Verfahren nach Anspruch 7, wobei die Ressource zur Bestätigung/Nichtbestätigung hybrider automatischer Wiederholungsanforderungen der Aufwärtsstrecke eine physikalische Indikatorkanalressource hybrider automatischer Wiederholungsanforderungen ist.

9. Verfahren nach Anspruch 8, wobei das Verfahren ferner das Berechnen des einen oder der mehreren Werte zur Bestimmung der physikalischen Indikatorkanalressource hybrider automatischer Wiederholungsanforderungen derart, dass die physikalische Indikatorkanalressource hybrider automatischer Wiederholungsanforderungen dieselbe für alle Benutzerendgeräte derselben physikalischen Indikatorkanalgruppe hybrider automatischer Wiederholungsanforderungen wird, beinhaltet.

10. Verfahren nach Anspruch 7, wobei der berechnete eine oder die berechneten mehreren Werte zur Bestimmung der Ressource zur Bestätigung/Nichtbestätigung hybrider automatischer Wiederholungsanforderungen der Aufwärtsstrecke eine zyklische Verschiebung von Demodulationsreferenzsymbolen der Aufwärtsstrecke beinhalten.

11. Verfahren nach Anspruch 7, wobei das Verfahren ferner das Senden des berechneten einen oder der berechneten mehreren Werte zur Bestimmung der Ressource zur Bestätigung/Nichtbestätigung hybrider automatischer Wiederholungsanforderungen der Aufwärtsstrecke an jedes Benutzerendgerät beinhaltet.

12. Verfahren nach Anspruch 7, wobei das Verfahren ferner beinhaltet, immer eine positive Bestätigung mit einer Bestätigungssignalisierung zu senden, die an die Benutzerendgeräte gesendet wird, welche nicht nichtadaptiv geplant werden.

13. Produktionsartikel (104), welcher ein computerlesbares Medium (204) und ein Verfahren verkörpernde Programmanweisungen auf diesem aufweist, die durch einen betriebsfähig mit einem Speicher gekoppelten Computer (202, 212) ausführbar sind und, wenn sie durch den Computer ausgeführt werden, die Funktion des Berechnens eines oder mehrerer Werte zur Bestimmung einer Ressource zur Bestätigung/Nichtbestätigung hybrider automatischer Wiederholungsanforderungen der Aufwärtsstrecke für jedes geplante Benutzerendgerät ausführt, derart, dass die Ressource zur Bestätigung/Nichtbestätigung hybrider automatischer Wiederholungsanforderungen der Aufwärtsstrecke dieselbe für alle Benutzerendgeräte wird, welche nicht nichtadaptiv geplant werden.

14. Produktionsartikel nach Anspruch 13, wobei die Ressource zur Bestätigung/Nichtbestätigung hybrider automatischer Wiederholungsanforderungen der Aufwärtsstrecke eine physikalische Indikatorkanalressource hybrider automatischer Wiederholungsanforderungen ist und der Produktionsartikel ferner die Funktion des Berechnens des einen oder der mehreren Werte zur Bestimmung der physikalischen Indikatorkanalressource hybrider automatischer Wiederholungsanforderungen derart ausführt, dass die physikalische Indikatorkanalressource hybrider automatischer Wiederholungsanforderungen dieselbe für alle Benutzerendgeräte derselben physikalischen Indikatorkanalgruppe hybrider automatischer Wiederholungsanforderungen wird.

15. Produktionsartikel nach Anspruch 13, wobei der berechnete eine oder die berechneten mehreren Werte zur Bestimmung der Ressource zur Bestätigung/Nichtbestätigung hybrider automatischer Wiederholungsanforderungen der Aufwärtsstrecke eine zyklische Verschiebung von Demodulationsreferenzsymbolen der Aufwärtsstrecke beinhalten.

16. Produktionsartikel nach Anspruch 13, welcher ferner die Funktion des Sendens des berechneten einen oder der berechneten mehreren Werte zur Bestimmung der Ressource zur Bestätigung/Nichtbestätigung hybrider automatischer Wiederholungsanforderungen der Aufwärtsstrecke an jedes Benutzerendgerät ausführt.

**17.** Produktionsartikel nach Anspruch 13, welcher ferner die Funktion ausführt, immer eine positive Bestätigung mit einer Bestätigungssignalisierung zu senden, die an die Benutzerendgeräte gesendet wird, welche nicht nichtadaptiv geplant werden.

**18.** Produktionsartikel nach Anspruch 13, wobei das computerlesbare Medium mindestens eines der folgenden Medien beinhaltet: ein computerlesbares Medium, ein Programmspeichermedium, ein Aufzeichnungsmedium, einen computerlesbaren Speicher, ein computerlesbares Softwareverteilungspaket, ein computerlesbares Signal, ein computerlesbares Telekommunikationssignal und ein computerlesbares komprimiertes Softwarepaket.

## Revendications

**1.** Un appareil (104) comprenant un calculateur (212) configuré de façon à calculer une ou plusieurs valeurs pour la détermination d'une ressource d'accusé de réception/non-accusé de réception de demande de répétition automatique hybride en liaison montante pour chaque terminal d'utilisateur planifié (102A, 102B) de sorte que la ressource d'accusé de réception/non-accusé de réception de demande de répétition automatique hybride en liaison montante devienne la même pour tous les terminaux d'utilisateur qui ne sont pas planifiés de manière non adaptative.

**2.** L'appareil selon la revendication 1, dans lequel la ressource d'accusé de réception/non-accusé de réception de demande de répétition automatique hybride en liaison montante est une ressource de canal indicateur de demande de répétition automatique hybride physique.

**3.** L'appareil selon la revendication 2, dans lequel le calculateur est configuré en outre de façon à calculer les une ou plusieurs valeurs pour la détermination de la ressource de canal indicateur de demande de répétition automatique hybride physique de sorte que la ressource de canal indicateur de demande de répétition automatique hybride physique devienne la même pour tous les terminaux d'utilisateur du même groupe de canal indicateur de demande de répétition automatique hybride physique.

**4.** L'appareil selon la revendication 1, dans lequel les une ou plusieurs valeurs calculées pour la détermination de la ressource d'accusé de réception/non-accusé de réception de demande de répétition automatique hybride en liaison montante comprennent un décalage cyclique de symbole de référence de démodulation en liaison montante.

**5.** L'appareil selon la revendication 1, l'appareil comprenant en outre un émetteur configuré de façon à transmettre les une ou plusieurs valeurs calculées pour la détermination de la ressource d'accusé de réception/non-accusé de réception de demande de répétition automatique hybride en liaison montante à chaque terminal d'utilisateur.

**6.** L'appareil selon la revendication 1, dans lequel l'émetteur est configuré en outre de façon à toujours transmettre un accusé de réception positif avec un signal d'accusé de réception transmis aux terminaux d'utilisateur qui ne sont pas planifiés de manière non adaptative.

**7.** Un procédé comprenant le calcul d'une ou de plusieurs valeurs pour la détermination d'une ressource d'accusé de réception/non-accusé de réception de demande de répétition automatique hybride en liaison montante pour chaque terminal d'utilisateur planifié de sorte que la ressource d'accusé de réception/non-accusé de réception de demande de répétition automatique hybride en liaison montante devienne la même pour tous les terminaux d'utilisateur qui ne sont pas planifiés de manière non adaptative.

**8.** Le procédé selon la revendication 7, dans lequel la ressource d'accusé de réception/non-accusé de réception de demande de répétition automatique hybride en liaison montante est une ressource de canal indicateur de demande de répétition automatique hybride physique.

**9.** Le procédé selon la revendication 8, le procédé comprenant en outre le calcul des une ou plusieurs valeurs pour la détermination de la ressource de canal indicateur de demande de répétition automatique hybride physique de sorte que la ressource de canal indicateur de demande de répétition automatique hybride physique devienne la même pour tous les terminaux d'utilisateur du même groupe de canal indicateur de demande de répétition automatique hybride physique.

**10.** Le procédé selon la revendication 7, dans lequel les une ou plusieurs valeurs calculées pour la détermination de la ressource d'accusé de réception/non-accusé de réception de demande de répétition automatique hybride en liaison montante comprennent un décalage cyclique de symbole de référence de démodulation en liaison montante.

**11.** Le procédé selon la revendication 7, le procédé comprenant en outre la transmission des une ou plusieurs valeurs calculées pour la détermination de la ressource d'accusé de réception/non-accusé de réception de demande de répétition automatique hybride en liaison montante à chaque terminal d'utilisateur.

**12.** Le procédé selon la revendication 7, le procédé comprenant en outre la transmission systématique d'un accusé de réception positif avec un signal d'accusé de réception transmis aux terminaux d'utilisateur qui ne sont pas planifiés de manière non adaptative.

**13.** Un article manufacturé (104) comprenant un support lisible par ordinateur (204) et contenant des instructions de programme exécutables par un ordinateur (202, 212) couplé de manière opérationnelle à une mémoire et, lorsqu'elles sont exécutées par l'ordinateur, destinées à exécuter la fonction de calcul d'une ou de plusieurs valeurs pour la détermination d'une ressource d'accusé de réception/non-accusé de réception de demande de répétition automatique hybride en liaison montante pour chaque terminal planifié de sorte que la ressource d'accusé de réception/non-accusé de réception de demande de répétition automatique hybride en liaison montante devienne la même pour tous les terminaux d'utilisateur qui ne sont pas planifiés de manière non adaptative.

**14.** L'article manufacturé selon la revendication 13, dans lequel la ressource d'accusé de réception/non-accusé de réception de demande de répétition automatique hybride en liaison montante est une ressource de canal indicateur de demande de répétition automatique hybride physique, et l'article manufacturé exécute en outre la fonction de calcul des une ou plusieurs valeurs pour la détermination de la ressource de canal indicateur de demande de répétition automatique hybride physique de sorte que la ressource de canal indicateur de demande de répétition automatique hybride physique devienne la même pour tous les terminaux d'utilisateur du même groupe de canal indicateur de demande de répétition automatique hybride physique.

**15.** L'article manufacturé selon la revendication 13, dans lequel les une ou plusieurs valeurs calculées pour la détermination de la ressource d'accusé de réception/non-accusé de réception de demande de répétition automatique hybride en liaison montante comprennent un décalage cyclique de symbole de référence de démodulation en liaison montante.

**16.** L'article manufacturé selon la revendication 13, comprenant en outre l'exécution de la fonction de transmission des une ou plusieurs valeurs calculées pour la détermination de la ressource d'accusé de réception/non-accusé de réception de demande de répétition automatique hybride en liaison montante à chaque terminal d'utilisateur.

**17.** L'article manufacturé selon la revendication 13, comprenant en outre l'exécution de la fonction de transmission systématique d'un accusé de réception positif avec un signal d'accusé de réception transmis aux terminaux d'utilisateur qui ne sont pas planifiés de manière non adaptative.

**18.** L'article manufacturé selon la revendication 13, le support lisible par ordinateur comprenant au moins un des supports suivants : un support lisible par ordinateur, un support de stockage de programmes, un support d'enregistrement, une mémoire lisible par ordinateur, un logiciel lisible par ordinateur, un signal lisible par ordinateur, un signal de télécommunications lisible par ordinateur et un logiciel compressé lisible par ordinateur.

Fig. 1

Fig. 2

104

301

eNB

ALLOCATE PRBs AND
SELECT PHICH GROUP

302 CALCULATE $n_{DMRS}$

304 DL TRANSMISSION
(WITH $n_{DMRS}$ )

306 UL TRANSMISSION

308 ACK/NACK
SIGNALLING

102

UE

**Fig. 3**

START 400

CALCULATE ONE OR MORE VALUES FOR
DETERMINATION OF UPLINK HARQ ACK/NACK
RESOURCE FOR EACH UE SCHEDULED FOR
RETRANSMISSION SUCH THAT UPLINK HARQ
ACK/NACK RESOURCE BECOMES THE SAME
FOR ALL UEs

402

404

END

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20090109906 A